# EUROPEAN PATENT SPECIFICATION

(11) **EP 0 452 134 B1**
(45) Date of publication and mention of the grant of the patent: **23.08.1995**
(21) Application number: 91303225.6
(22) Date of filing: 11.04.1991
(51) Int. Cl.: G01F 1/68

(54) **Diaphragm-type sensor**
Membransensor
Capteur du type à diaphragme

(30) Priority: 13.04.1990 JP 96520/90
(43) Date of publication of application: 16.10.1991
(73) Proprietor: YAMATAKE-HONEYWELL CO. LTD., Tokyo 150 (JP)
(72) Inventor: Nagata, Mitsuhiko, Fujisawa-city, Kanagawa (JP); Kurosawa, Takashi, Grandoru Chigasaki D-202, Chigasaki-city, Kanagawa (JP); Kamiunten, Shoji, Chigasaki-city, Kanagawa (JP); Yamamoto, Tomoshige, c/o Yamatake-Honeywell, Sagamihara-city, Kanagawa (JP)
(74) Representative: Vaufrouard, John Charles

(56) References cited:
- EP-A- 0 271 660
- EP-A- 0 319 871
- WO-A-89/05963
- US-A- 4 706 061
- US-A- 4 784 721

## Description

### BACKGROUND OF THE INVENTION

### Field of the Invention

This invention relates to a diaphragm-type flow sensor for use in a flow detecting apparatus and so on.

### Description of the Prior Art

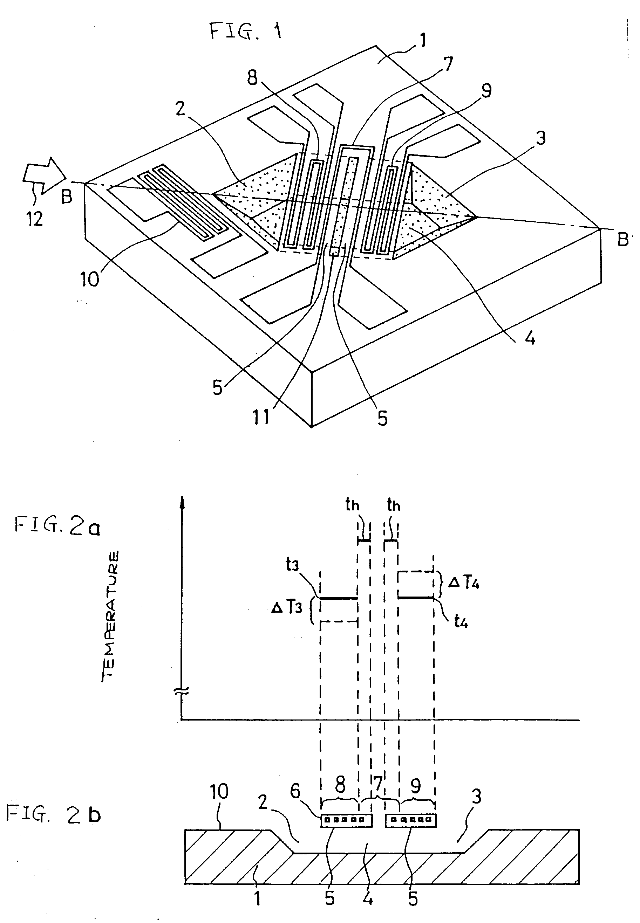

Figure 1 is a perspective view of a conventional flow sensor of a type known as a mircrobridge flow sensor and which is described in detail in the published Japanese Patent Application Number 2-193019. The flow sensor as illustrated comprises a semiconductor substrate 1 made, for example, of silicon which is formed with a cavity 4 at a central portion thereof communicating openings 2, 3 at both side portions. A bridge 5 is formed over the cavity 4 so as to be thermally insulated from the semiconductor substrate 1. The bridge 5 includes a thin-film heater element 7 and two thin-film thermally sensitive resistor elements 8, 9 aligned on both sides of the heater element 7, the three elements being formed by a known thin-film forming technique. The semiconductor substrate 1 further comprises another thin-film thermally sensitive resistor element 10 formed at a corner portion thereof. A slit-like central opening 11 is also formed in addition to the side openings 2, 3 such that portions exposed by these openings 2, 3 and 11 are etched by an anisotropic etchant such as KOH to form the cavity 4 in an inverted trapezoidal shape as well as the bridge 5 supported by the semiconductor substrate 1, wherein the heater element 7 and the thermal sensor elements 8, 9 are thermally insulated from the semiconductor substrate 1 by the cavity 4. The elements 7, 8 and 9 are further encapsulated by a protective layer (6 in Figure 2) made of a material having a low thermal conductivity ratio such as silicon nitride.

Figures 2a and 2b shows the operation of the microbridge flow sensor shown in Figure 1. Figure 2a illustrates a temperature distribution of the respective elements 7,8 and 9 while Figure 2b a cross-sectional view of the sensor taken along a line B-B' of Figure 1.

If the heater element 7 is controlled to remain at a constant temperature higher than an ambient temperature, for example 63°C, the thermal sensor elements 8,9 exhibit a substantially equal temperature as shown in Figure 2a, for example, 35°C. In this circumstance, if a fluid flows in the direction indicated by an arrow 12 shown in Figure 1, the upstream sensor element 8 is cooled down by a temperature ΔT₃ while the downstream sensor element 9 is heated by ΔT₄. Consequently, a temperature difference is produced between the upstream sensor element 8 and the downstream sensor element 9. Thus, the microbridge flow sensor is used for detecting flow rates by incorporating the thermal sensor elements 8, 9 in a Wheatstone bridge to convert the temperature difference to a voltage signal corresponding to a flow rate of a fluid under measurement.

The microbridge flow sensor, as mentioned above, has a thin film bridge structure with an extremely small thermal capacitance formed by the thin film technique and the anisotropic etching technique and is advantageous in a very high response speed, a high sensitivity, a low power consumption, a good adaptability to a mass production, and so on. However, each sensor element 8,9 is provided on a portion of the thin film bridge structure and is heated thereby such that the thermally sensing resistors are subject to stressing and distortion caused to the thin film results in stressing of the sensor element and inaccuracies in calibration and measurement.

European Patent Application Number 0319871A1 discloses a thin-film orthogonal microsensor for air flow and a method for its fabrication. This device has a diaphragm on which there is mounted a pair of detectors and an intermediate heater. The heater introduces structural distortion to the thin film which causes stressing of the sensor elements and variation of resistance values which results in errors in calibration and measurement of flow. European Patent Application Number EP 0271660A discloses a sensor in which slots are provided between two compensation resistors and also between one of the compensation resistor and a sensor resistor. The slots here are provided in order to provide thermal insulation between the compensation resistors and also between one of the compensation resistors and a sensor resistor. The sensor resistor in this device is intentionally heated by the heater resistor, and is a layer of the same portion of the film, whilst the compensation resistors are thermally isolated from the heater so that their temperature is not influenced thereby.

It is an object of the invention to provide a diaphragm-type sensor in which structural deformation of the sensor by the heating element is avoided so that variation in the output characteristics of the sensors, which result in change of the output measurements, is avoided.

According to the present invention there is provided a flow sensor for detecting a fluid flow, comprising a substrate with a cavity formed therein, a thin diaphragm supported at its edge by the substrate and covering the cavity, a heater provided on the diaphragm, a first sensor provided on the diaphragm on one side of the heater and a second sensor provided on the diaphragm on the other side of the heater, characterised in that a first slot is formed in the diaphragm between the first sensor and the heater and a second slot is formed in the diaphragm between the second sensor and the heater.

By introducing a slot between each of the sensor elements and the heater, any deformation of the heater carrying portion of the diaphragm is not transferred to the sensor carrying portion of the diaphragm.

The above and other objects and features of the present invention will become apparent from the following detailed description of the preferred embodiments with reference to the accompanying drawings.

### BRIEF DESCRIPTION OF THE DRAWINGS

Fig. 1 is a perspective view showing a conventional microbridge flow sensor;
Figs. 2a and 2b are diagrams used for explaining the operation of the conventional microbridge flow sensor shown in Fig. 1;
Fig. 3a is a plan view showing a main portion of a first embodiment of a diaphragm-type sensor;
Fig. 3b is a cross-sectional view of the diaphragm-type sensor shown in Fig. 3a taken along a line B-B';
Fig. 4a is a plan view showing a main portion of a second embodiment of a diaphragm sensor;
Fig. 4b is a cross-sectional view of the diaphragm sensor shown in Fig. 4a taken along a line B-B';
Fig 5a, 5b are graphs showing the relationship between an applied current to a heater element and an output from a sensor element; and
Figs. 6a, 6b are diagrams used for explaining a method of forming a cavity in a semiconductor substrate.

### DETAILED DESCRIPTION OF THE PREFERRED EMBODIMENTS

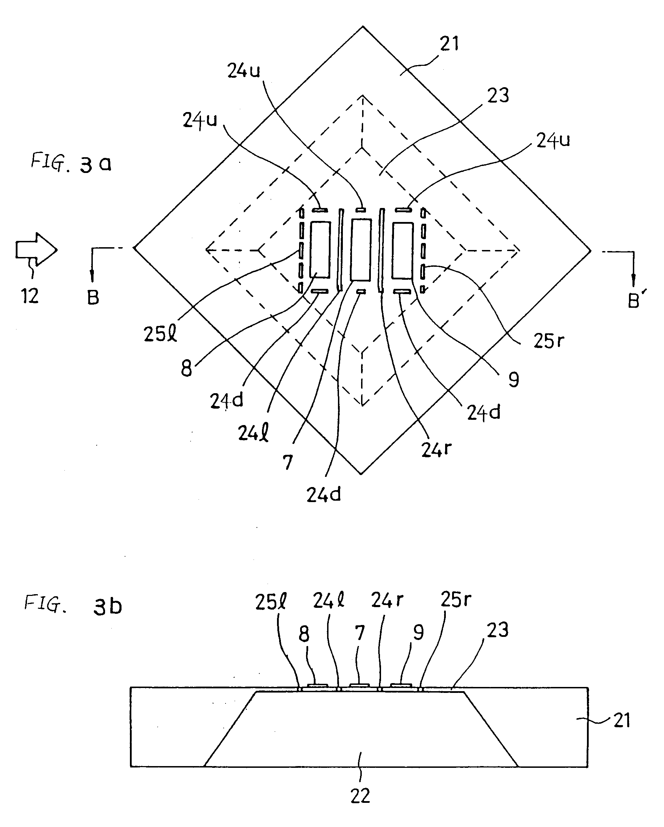

Figs. 3a and 3b respectively show a plan view and a cross-sectional view of a first embodiment of a diaphragm-type sensor. A semiconductor substrate 21 made, for example, of silicon is formed on the rear surface thereof with a cavity 22 in an inverted trapezoidal shape, for example, by an anisotropic etching to an extent that the cavity 22 does not reach the main surface of the semiconductor substrate 21. Thereby, a thin diaphragm 23 is formed, integral with the semiconductor substrate 21, on the main surface thereof. On a central portion of the surface of a diaphragm 23 there are formed a heater element 7 and thin-film thermal sensitive resistor elements 8, 9 on the both sides of the heater element 7 which are parallely aligned with a substantially equal space therebetween. The heater element 7 and the sensor elements 8,9 are surrounded by a multiplicity of slots as shown in Figure 3a. More specifically, a group of rectangular slots 25r are formed on the right of the element 9, elongated slots 24r and 24l between the elements 7 and 9 and between the elements 7 and 8, respectively, a group of rectangular slots 251 on the left side of the element 8, and two other groups of slots 24u and 24d above and below the elements 7 - 9, respectively. The provision of a slot 24l, 24r in the diaphragm, between each sensor element 8, 9 and the heater element 7 prevents distortion of the portion of the diaphragm which carries the heater element from being transferred to the portion of the diaphragm which carries the sensor element and thereby prevents inaccuracies in measurement which can result from such distortion.

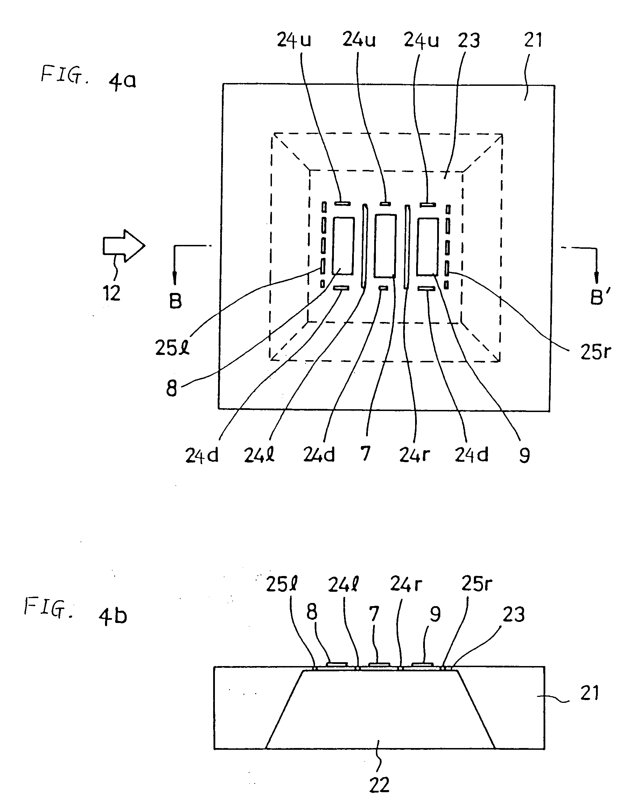

Figures 4a and 4b respectively show a plan view and a cross-sectional view of a second embodiment of a diaphragm-type sensor. The second embodiment differs from the first embodiment in that the sensor is oriented such that a fluid flow passes the sensor perpendicularly to the lateral sides of the sensor. Such an orientation allows a smooth flow through the sensor.

The above structure including the two sensor elements 8, 9 on both sides of the heater element 7 permits a detection of zero flow by monitoring a balance condition of the sensor elements 8, 9 with respect to a fluid flow from a direction indicated by an arrow 12 or the reverse direction, thereby making it possible to set a stable zero point. This feature further leads to enable a measurement of a low rate flow with a high accuracy. The elongated slots 241, 24r formed on both sides of the heater element 7 also effectively prevent heat conduction through the diaphragm from the heater elements 7 to the sensor elements 8, 9 so that under conditions of zero flow the sensor resistance of the elements 8, 9 is not influenced by the heat generated by the nearby heater element 7. The slot groups formed around the elements 7,8,9 effectively insulate the upstream and downstream sensor elements from the heater element and the sensitivity of the sensor is improved at low flow rates.

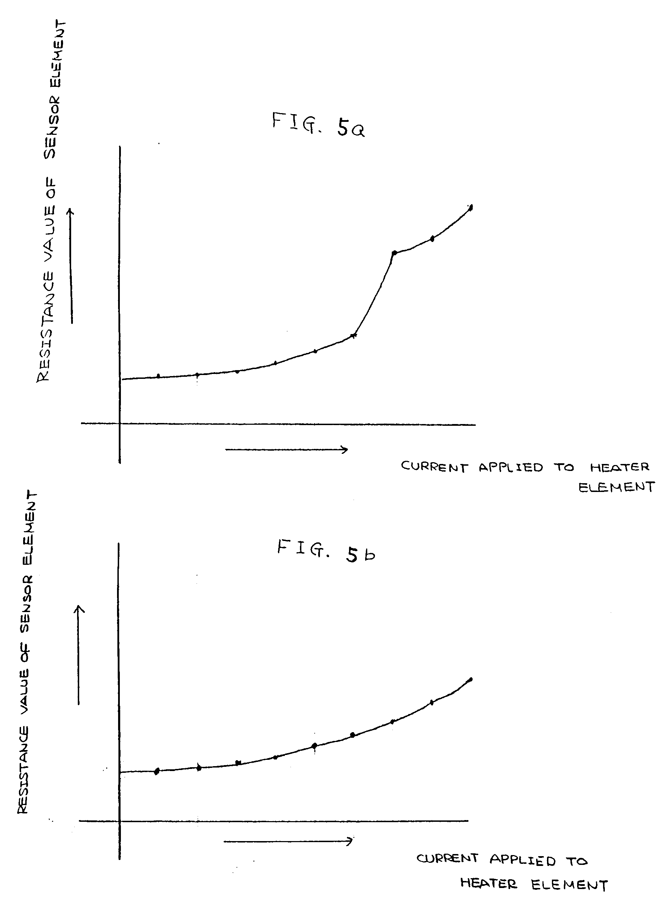

In the first and second embodiments, the heater element 7, when supplied with an electric power to be heated, suffers a thermal deformation, however, the influence of such a deformation is prevented from exerting on sensor elements 8, 9 by slots 24l, 24r. This remarkable effect will be explained in detail with reference to Figures 5a, 5b.

Figure 5a indicates a change in the resistance value of the sensor elements of the diaphragm sensor which does not have slots between the heater element and the respective sensor elements as a current supplied to the heater element is being increased, while Figure 5b indicates the same change of the diaphragm sensor which has the heater element and the sensor elements respectively separated by slots 24l and 24r under the same condition. An increase of a heater current causes a mechanical deformation of the diaphragm 23 due to propagation of heat generated in the heater element to the diaphragm 23. In the diaphragm sensor which is not provided with slots between the heater element and the respective sensor elements, the deformation of the diaphragm 23 also affects elements 8, 9 and causes distortion of the sensor elements 8,9 when such mechanical deforming force exceeds a certain limit value, which results in an error in the resistance value of the sensor elements 8,9, as shown in Figure 5a. The position of this limit value may vary according to conditions. Further, the two sensor elements 8,9 are not equally influenced by such force and accordingly the balance therebetween is quite variable. Actually, a necessary current for obtaining a sufficient sensitivity often exceeds the limit value. Particularly, in a use where the sensor is intermittently driven by an intermittently supplied current exceeding the limit value, the characteristics of the sensor elements vary each time the current is supplied, which results in degrading the measuring accuracy.

On the contrary, the diaphragm sensor having the slots 24l, 24r completely prevents the deformation of the portion of diaphragm 23 which carries the heater from influencing the sensor elements 8, 9, whereby the sensor exhibits stable output characteristics as shown in Figure 5b.

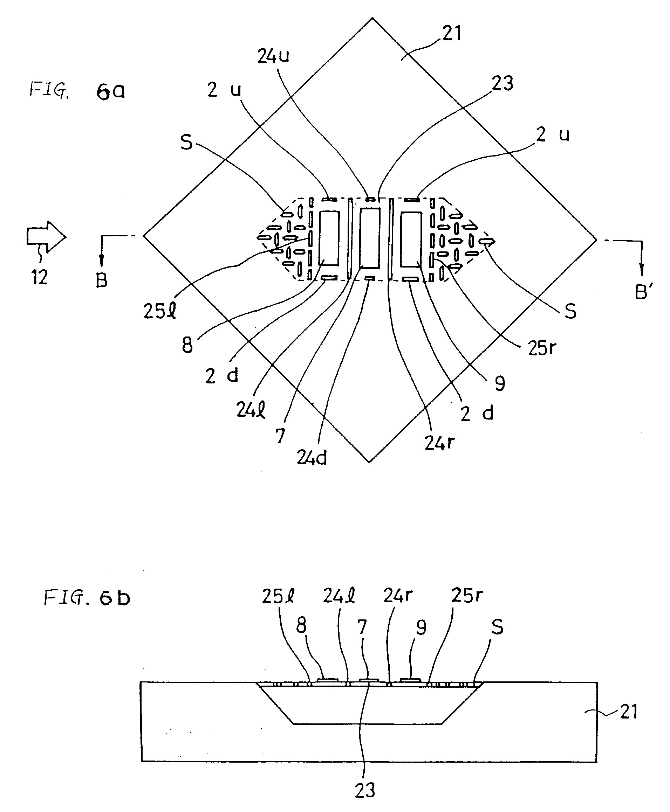

In the above-mentioned embodiments, the cavity 22 is formed by etching the semiconductor substrate 21 from the lower surface thereof, however, as shown in Fig. 6a, a multiplicity of slots S may be provided to etch the semiconductor substrate 21 by anisotropic or isotropic etching making use of the etching characteristic of the crystal axis, to form a cavity beneath the diaphragm 23.

The cross-section of a slot may be of any appropriate shape and relative dimensions.

Also, the semiconductor substrate 21 is not limited to that made of silicon, and a metal substrate made, for example, of aluminum or stainless may be used as the semiconductor substrate 21. In this case, the diaphragm may be formed of an insulating layer such as SiO₂, Si₃N₄.

The diaphragm may be formed by several methods other than etching as mentioned above such as a laser machining. It is also possible to separately make a substrate and a diaphragm and adhere the diaphragm on the substrate.

Since many changes could be made in the above construction and many apparently widely differing embodiments of the present invention could be made without departing from the scope thereof, it is intended that all matter contained in the above description or shown in the accompanying drawings shall be interpreted as illustrative and not in a limiting sense.

## Claims

1. A flow sensor for detecting a fluid flow, comprising a substrate (21) with a cavity (22) formed therein, a thin diaphragm (23) supported at its edge by the substrate and covering the cavity, a heater (7) provided on the diaphragm, a first sensor (8) provided on the diaphragm on one side of the heater and a second sensor (9) provided on the diaphragm on the other side of the heater, characterised in that a first slot (24l) is formed in the diaphragm (23) between the first sensor (8) and the heater (7) and a second slot (24r) is formed in the diaphragm (23) between the second sensor (9) and the heater (7).

2. A sensor as claimed in claim 1, characterised in that the slots (24l, 24r) extend at least for the length of the heater (7).

3. A sensor as claimed in Claim 1 or 2, characterised in that the sensor is oriented such that a fluid flow (12) passes the sensors (8,9) perpendicularly to their lateral sides.

4. A sensor as claimed in any one of the preceding claims, characterised in that a further slot (24u, 24d) is provided at each end of the heater, which slots extend in a direction transversely of longitudinal axes taken through first and second slots (24l & 24r).

5. A sensor as claimed in any one of the preceding claims, characterised in that a plurality of aligned further slots (24u, 24d are located on two axes which extends transversely of longitudinal axes taken through first and second slots (24l, 24r) to opposite ends of the heater (7).

6. A sensor as claimed in any one of the preceding claims, characterised in that to the opposite side of each of the sensors (8,9) remote from the slot (24d, 24r) there is provided a row of slots (25l, 25r).

7. A sensor as claimed in any one of the preceding claims, characterised in that the diaphragm (23) is formed by part of the substrate (21) left at the base of the cavity (22).

8. A sensor as claimed in any one of the preceding claims, characterised in that the cavity is formed in the substrate by etching.

## Patentansprüche

1. Strömungssensor zur Erfassung eines Flüssigkeitsstroms, umfassend ein Substrat (21) mit einer darin gebildeten Aushöhlung (22), eine an seiner Kante von dem Substrat getragene und die Aushöhlung bedeckenden Membran (23), eine auf der Membran angeordnete Heizvorrichtung (7), einen auf der Membran auf der einen Seite der Heizvorrichtung angeordneten ersten Sensor (8) und einen auf der anderen Seite der Heizvorrichtung auf der Membran angeordneten zweiten Sensor (9), dadurch gekennzeichnet, daß in der Membran (23) zwischen dem ersten Sensor (8) und der Heizvorrichtung (7) ein erster Schlitz (24l) und in der Membran (23) zwischen dem zweiten Sensor (9) und der Heizvorrichtung (7) ein zweiter Schlitz (24r) gebildet ist.

2. Sensor nach Anspruch 1, dadurch gekennzeichnet, daß die Schlitze (24l, 24r) mindestens die Länge der Heizvorrichtung (7) haben.

3. Sensor nach einem der Ansprüche 1 oder 2, dadurch gekennzeichnet, daß der Sensor so angeordnet ist, daß ein Flüssigkeitsstrom (12) die Sensoren (8,9) senkrecht zu seinen Längsseiten passiert.

4. Sensor nach irgendeinem der vorangegangenen Ansprüche, dadurch gekennzeichnet, daß ein weiterer Schlitz (24u, 24d) an jedem Ende der Heizvorrichtung angeordnet ist, wobei diese Schlitze sich in einer Richtung quer zu den Längsachsen durch die ersten und zweiten Schlitze (24l & 24r) erstrecken.

5. Sensor nach irgendeinem der vorangegangenen Ansprüche, dadurch gekennzeichnet, daß eine Mehrzahl gleich ausgerichteter weiterer Schlitze (24u, 24d) auf zwei Achsen angeordnet sind, die sich an den gegenüberliegenden Enden der Heizvorrichtung (7) quer zu den Längsachsen durch die ersten und zweiten Schitze (24l, 24r) erstrecken.

6. Sensor nach irgendeinem der vorangegangenen Ansprüche, dadurch gekennzeichnet, daß an der den Schlitzen (24d, 24r) gegenüberliegenden Seite der beiden Sensoren (8,9) eine Reihe von Schlitzen (25l, 25r) angeordnet ist.

7. Ein Sensor gemäß irgendeinem der vorangegangenen Ansprüche, dadurch gekennzeichnet, daß die Membran (23) durch einen Teil des Substrats (21) gebildet wird, der am Boden der Aushöhlung (22) verbleibt.

8. Sensor nach irgendeinem der vorangegangenen Ansprüche, dadurch gekennzeichnet, daß die Aushöhlung im Substrat durch Ätzen gebildet wird.

## Revendications

1. Capteur de débit pour mesurer un débit de fluide, comportant un substrat (21) dans lequel est formée une cavité (22), un diaphragme (23) de faible épaisseur qui est maintenu par son bord sur le substrat et qui recouvre la cavité, un élément de chauffant (7) agencé sur le diaphragme, un premier capteur (8) agencé sur le diaphragme d'un côté de l'élément chauffant et un second capteur (9) agencé sur le diaphragme de l'autre côté de l'élément chauffant, caractérisé en ce qu'une première fente (24l) est formée dans le diaphragme (23) entre le premier capteur (8) et l'élément chauffant (7) et en ce qu'une seconde fente (24r) est formée dans le diaphragme (23) entre le second capteur (9) et l'élément chauffant (7).

2. Capteur selon la revendication 1, caractérisé en ce que les fentes (24l, 24r) s'étendent sur une longueur au moins égale à celle de l'élément chauffant.

3. Capteur selon l'une des revendications 1 ou 2, caractérisé en ce que le capteur est orienté de sorte qu'un débit de fluide (12) s'écoule perpendiculairement aux faces latérales des capteurs (8, 9).

4. Capteur selon l'une quelconque des revendications précédentes, caractérisé en ce qu'une fente supplémentaire (24u, 24d) est agencée à chacune des extrémités de l'élément chauffant, lesquelles fentes s'étendent suivant une direction perpendiculaire à des axes longitudinaux déterminés par les première et seconde fentes (24l, 24r).

5. Capteur selon l'une quelconque des revendications précédentes, caractérisé en ce qu'une pluralité de fentes supplémentaires alignées (24u, 24d) sont agencés selon deux axes qui s'étendent perpendiculairement à des axes longitudinaux déterminés par les première et seconde fentes (24l, 24r) et reliant les extrémités opposées de l'élément chauffant (7).

6. Capteur selon l'une quelconque des revendications précédentes, caractérisé en ce que une rangée de fentes (25l, 25r) est agencée le long des côtés opposés de chacun des capteurs (8, 9) qui sont éloignés de la fente (24l, 24r).

7. Capteur selon l'une quelconque des revendications précédentes, caractérisé en ce que le diaphragme (23) est formé par une partie du substrat (21) qui subsiste à la base de la cavité (22).

8. Capteur selon l'une quelconque des revendications précédentes, caractérisé en ce que la cavité est réalisée par attaque sélective du substrat.
